(19) **Europäisches Patentamt**

**European Patent Office**

**Office européen des brevets**

(11) **EP 1 183 503 B1**

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(51) Int Cl.⁷: **G01F 23/284**, G01S 13/34, G01S 7/35

(21) Anmeldenummer: **00943546.2**

(22) Anmeldetag: **04.05.2000**

(86) Internationale Anmeldenummer:
**PCT/DE00/01407**

(87) Internationale Veröffentlichungsnummer:
**WO 00/073747 (07.12.2000 Gazette 2000/49)**

(54) **VERFAHREN ZUR STÖRSIGNALFREIEN AUSWERTUNG VON RADARSIGNALEN**

METHOD FOR THE NOISE-FREE EVALUATION OF RADAR SIGNALS

PROCEDE POUR EVALUER, SANS PARASITE, DES SIGNAUX RADAR

(84) Benannte Vertragsstaaten:
**FR GB**

(30) Priorität: **01.06.1999 DE 19925216**

(43) Veröffentlichungstag der Anmeldung:
**06.03.2002 Patentblatt 2002/10**

(73) Patentinhaber: **SIEMENS AKTIENGESELLSCHAFT**
**80333 München (DE)**

(72) Erfinder:
• **GULDEN, Peter**
**D-57078 Siegen (DE)**
• **VOSSIEK, Martin**
**D-80789 München (DE)**
• **STORCK, Eckhard**
**D-81475 München (DE)**
• **HEIDE, Patric**
**D-85579 Neubiberg (DE)**

(56) Entgegenhaltungen:
**WO-A-99/10757        DE-A- 4 327 333**

• **DETLEF BRUMBI: "MEASURING PROCESS AND STORAGE TANK LEVEL WITH RADAT TECHNOLOGY" INTERNATIONAL RADAR CONFERENCE, US, NEW YORK, IEEE, 8. Mai 1995 (1995-05-08), Seiten 256-260, XP000529121 ISBN: 0-7803-2121-9**

**Beschreibung**

Die Erfindung betrifft die Analyse von Frequenzspektren eines FMCW-Mikrowellenradarsystems, in denen mindestens eine nahezu konstante Störfrequenz vorhanden ist.

Bei FMCW-Radarsystemen, die z. B. als Abstandssensoren eingesetzt werden, gewinnt man die Größen Entfernung und Geschwindigkeit eines Meßobjektes durch eine Analyse der in einem Radarsignal enthaltenen Frequenzen. Sämtliche bekannten Verfahren zur Frequenzanalyse (z. B. WO99/10757) weisen aber systembedingt eine begrenzte Auflösung auf. Dadurch wird die Bestimmung einer Frequenz in der Nachbarschaft einer anderen entscheidend behindert.

Häufig treten in FMCW-Signalen neben den gewünschten Nutzfrequenzen $f_N$, die durch Reflexionen an Meßobjekten im Meßbereich hervorgerufen werden, auch unerwünschte systematische Störanteile mit den nahezu konstanten Frequenzen $f_S$ auf, in deren Nachbarschaft die Bestimmung von $f_N$ entscheidend behindert wird. Daher muß angestrebt werden, diese Störanteile wirkungsvoll zu unterdrücken.

Der derzeitige Stand der Technik zur Unterdrückung systematischer Störfrequenzen wird in S. V. Vaseghi: "Advanced Signal Processing and Digital Noise Suppression", Wiley Teubner, Chichester 1994, beschrieben. Dabei wird vorausgesetzt, daß die Frequenzen, Amplituden und Phasen der Störanteile sich von Messung zu Messung ändern. In der DE 43 32 071 A1 ist ein Verfahren beschrieben, bei dem das an der Antenne reflektierte Störsignal mit einem zuvor aufgenommenem Signalverlauf verglichen wird, um auftretende Ablagerungen an der Antenne zu detektieren. Bei diesem Verfahren wird vorausgesetzt, daß die Frequenzen, Amplituden und Phasen der Störanteile sich

nur auf Grund von externen Einflüssen wie z. B. Ablagerungen auf der Antenne ändern.

Die Störanteile von FMCW-Signalen können durch interne Reflexionen in der Elektronik und an der Antenne oder durch externe Reflexionen z. B. an Behälterboden und -streben verursacht sein. Sie besitzen tatsächlich unabhängig vom individuellen Meßvorgang nahezu gleichbleibende, a priori bekannte Frequenzen $f_S$, die entweder gemessen oder aus der Geometrie des Radarsensors berechnet werden können. Die dazugehörigen Amplituden und Phasen schwanken hingegen stark, z. B. auf Grund von Driften in der Radarelektronik, die die Radarmittenfrequenz verändern, und sind deshalb a priori unbekannt.

Aufgabe der vorliegenden Erfindung ist es, ein Verfahren zur Auswertung eines Meßsignales eines FMCW-Radarsystemes anzugeben, mit dem systematische Störungen durch ortsfeste Reflektoren, die auf internen oder externen Reflexionen beruhen, wirkungsvoll eliminiert werden können.

Diese Aufgabe wird mit dem Verfahren mit den Merkmalen des Anspruches 1 gelöst. Ausgestaltungen ergeben sich aus dem abhängigen Anspruch.

Ein Verfahren zur Elimination von Störanteilen gemäß dem Oberbegriff des Anspruchs 1 zeigt die DE 4327333.

Das erfindungsgemäße Verfahren basiert auf einer Auswertung des Radarsignales mittels einer Analyse des Frequenzspektrums. Die in dem Spektrum vorhandenen Störfrequenzen, die sich durch Störreflexionen ergeben, werden nach bestimmten mathematischen Verfahren eliminiert. Zu diesem Zweck wird zunächst eine Referenzmessung durchgeführt, die je nach Art der zu eliminierenden Störfrequenzen ohne oder mit nur einem Meßobjekt als Reflexionsziel durchgeführt wird. Das aus der Referenzmessung resultierende Frequenzspektrum wird vorzugsweise mit einer größeren Frequenzauflösung analysiert, als sie in dem normalen Meßbetrieb der Apparatur angewendet wird. Auf diese Weise werden die Frequenzen der Störanteile in dem Radarsignal bestimmt. Das erfindungsgemäße Verfahren beruht auf einer adaptiven, an das individuelle Meßsignal angepaßten Least-Squares-Fit-Bestimmung der Störamplituden und -phasen für die bekannten Störfrequenzen. Damit wird das von Messung zu Messung angepaßte Störsignal berechnet und vom FMCW-Meßsignal abgezogen. Das so bereinigte FMCW-Meßsignal wird dann einem der bekannten Verfahren zur Frequenzanalyse unterworfen. Eine andere Möglichkeit zur Bestimmung der Störanteile besteht in ihrer mathematischen Rekonstruktion an Hand des Systemaufbaus.

Zu den Meßsignalen werden diskrete Werte an einer vorgegebenen Anzahl von Abtastpunkten, die in gleichem zeitlichem Abstand zueinander liegen, bestimmt. Die so erfaßten Werte werden als komplexwertige Überlagerungen von Schwingungsfunktionen mit den Stör- und den Nutzfrequenzen aufgefaßt und mit mathematischen Rechenverfahren um die Störanteile bereinigt. Die so bereinigten Meßwerte werden dann einem der an sich bekannten Verfahren zur Frequenzanalyse unterworfen.

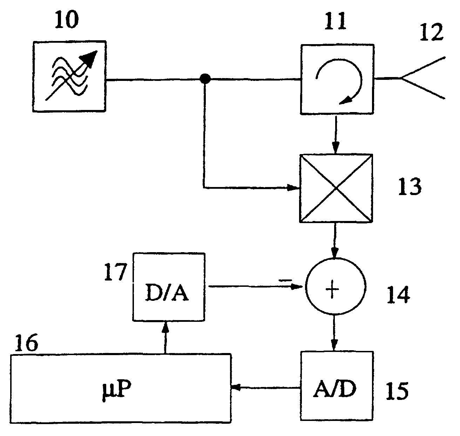

Es folgt eine genauere Beschreibung von Beispielen des erfindungsgemäßen Verfahrens anhand der beigefügten Figur, die ein Schema eines Mikrowellen-Radarsystems zeigt.

In der Figur ist ein monostatisches FMCW-Radarsystem dargestellt, bei dem als Signalquelle ein verstimmbarer Oszillator 10 (VCO) vorhanden ist. Die Signalfrequenz wird vorzugsweise linear von einem niedrigsten zu einem höchsten Wert oder umgekehrt durchgestimmt (Sweep). Das Signal passiert eine Sende-Empfangsweiche 11, die z. B. durch einen Zirkulator oder Richtkoppler gebildet sein kann, und gelangt zu der Antenne 12. Die Sende-Empfangsweiche ist dafür vorgesehen, das Sendesignal von dem Empfangssignal zu trennen. Das Empfangssignal wird einem Mischer 13 zugeführt, in dem es zum Zweck der Demodulation mit dem Sendesignal gemischt wird. Anschließend wird das heruntergemischte Signal, vorzugsweise nach einer nicht dargestellten Filterung zur Elimination störender hochfrequenter Anteile, der Auswerteeinheit 16 zugeführt. In der Auswerteeinheit werden auch die wesentlichen Rechenschritte ausgeführt, die das erfindungsgemäße Verfahren kennzeichnen und weiter unten im Einzelnen beschrieben werden. Bei einem dieser Verfahren wird eine Subtraktion zweier Signale vorgenommen. Die Subtraktion kann dann entweder direkt digital in der Auswerteeinheit durchgeführt werden oder analog mittels des Summiergliedes 14. Bei analoger Subtraktion passiert das demodulierte Empfangssignal zunächst dieses Summierglied und wird vorzugsweise mittels eines A/D-Wandlers 15 digitalisiert, so daß es in einer durch einen Mikroprozessor (µP) gebildeten Auswerteeinheit 16 ausgewertet werden kann. Die Werte, die die Störsignale repräsentieren und von dem demodulierten Empfangssignal abgezogen werden sollen, werden beispielsweise mittels eines D/A-Wandlers 17 in ein AnalogSignal umgewandelt, das invertiert (in sein Negatives) dem Summierglied 14 zugeführt wird.

Bei dem erfindungsgemäßen Verfahren wird zunächst eine Referenzmessung durchgeführt. Diese Referenzmessung wird dazu benutzt, die als nahezu konstant angenommenen Frequenzen der Störreflexionen zu bestimmen. Bei der Aufnahme der Referenzmessung wird das Auftreten von Nutzfrequenzen in direkter Nachbarschaft der Störfrequenzen vermieden. Wird das Radarsystem z. B. als Füllstandsmesser verwendet, sind auftretende Störfrequenzen auch auf zeitlich unveränderliche Reflexionen an den Tankeinbauten des Behälters zurückzuführen. Es wird in diesem Fall der leere Behälter ausgemessen, ohne daß ein Füllstandsspiegel vorhanden ist. Die Genauigkeit der Referenzmessung kann durch Mittelung über mehrere Messungen, durch Anwendung von Filtern oder auch durch Messung mit einer gegenüber dem Normalbetrieb vergrößerten FMCW-Meßbandbreite erhöht werden. Im anschließenden normalen Meßbetrieb werden dann, ausgehend von der Kenntnis dieser Störfrequenzen, die zugehörigen komplexen Amplituden der Störsignalterme in dem Meßsignal bestimmt. Das geschieht vorzugsweise, indem nach Methoden der linearen Algebra ein Verfahren zur Minimierung des quadratischen Fehlers der Lösung eines überbestimmten Gleichungssystems (Least-Squares-Fit) auf eine lineare Transformation eines äquidistant abgetasteten Meßsignales angewendet wird.

Das analoge Radarsignal wird an N Abtastpunkten, die in konstantem zeitlichem Abstand zueinander liegen, abgetastet, so daß man N diskrete Werte erhält, die in chronologischer Reihenfolge die Komponenten eines Vektors bilden. Die N Komponenten x(n), n = 1, 2, 3,..., N-1, N, werden in komplexer Schreibweise als Überlagerung von p Exponentialtermen mit weißem Rauschen dargestellt:

$$x(n) = \sum_{k=1}^{p} c_k \, e^{i\omega_k n} + w(n).$$

Dabei ist $k$ eine Numerierung der verschiedenen auftretenden Frequenzen $\omega_k$ mit den komplexen Amplituden $c_k$. Die Summation erstreckt sich über alle $p$ in dem Signal enthaltenen Frequenzen. Da die Störfrequenzen aus der Referenzmessung bekannt sind, lassen sich die komplexen Amplituden der Störanteile nach approximierenden Verfahren der linearen Algebra im Spektrum des Meßsignales so bestimmen, daß die Störanteile weitestgehend eliminiert werden können. Diese Bestimmung der komplexen Amplituden nach dem Least-Square-Prinzip (Verfahren kleinster Fehlerquadrate, d. h. minimale Summe der quadratischen Abweichungen) besitzt eine wesentlich höhere Auflösung als die Frequenzschätzverfahren, d. h. es werden Störanteile auch dann noch korrekt ermittelt, wenn sehr dicht benachbarte Nutzfrequenzen auftreten.

Zur Bestimmung der in dem normalen Meßsignal enthaltenen komplexen Amplituden bildet man vorzugsweise die Matrix F, deren Anzahl p an Zeilen der Anzahl vorhandener Störfrequenzen entspricht und die so viele Spalten besitzt, wie abgetastete Meßwerte vorhanden sind. An jeder Stelle der Matrix steht die Exponentialfunktion des Produktes aus i= $\sqrt{-1}$, der Spaltennummer und der jeweils einer Zeile zugeordneten Störfrequenz. Dieses Element besitzt also die Form $e^{i\omega_k n}$, wobei $k$ die Nummer der Störfrequenz und die Nummer der Zeile der Matrix ist und $n$ die Nummer der Spalte mit einem Wert von 1 bis N:

$$F = \begin{pmatrix} e^{j\omega_1 1} & e^{j\omega_1 2} & \ldots & e^{j\omega_1 N} \\ e^{j\omega_2 1} & \ddots & & \vdots \\ \vdots & & \ddots & \vdots \\ e^{j\omega_p 1} & \ldots & \ldots & e^{j\omega_p N} \end{pmatrix}.$$

Der Vektor des Meßsignales wird mit der Pseudoinversen der obigen Matrix multipliziert, die sich durch Anwendung eines Verfahrens kleinster Fehlerquadrate zur Bestimmung der Lösung eines überbestimmten linearen Gleichungssystems auf die zuvor angegebene Matrix bestimmen läßt. Auf diese Weise erhält man die zu den Exponentialfunktionen der Störfrequenzen gehörenden komplexen Amplituden $c_k$, wobei $k$ jetzt eine Numerierung der Störfrequenzen durchläuft. Der Störanteil, der durch Berechnung der zugehörigen komplexen Amplituden approximiert worden ist, läßt sich dann von den Komponenten des Vektors des Meßsignales subtrahieren. Man erhält so den um den systematischen Störanteil bereinigten Vektor der zeitlich äquidistanten Werte des Meßsignales. Darauf können dann herkömmliche Verfahren zur Frequenzanalyse angewendet werden. Dieses Verfahren führt insbesondere bei Messungen mit FMCW-Radarsensoren im Nahbereich zu einer Verbesserung der Meßgenauigkeit. Dieses Verfahrens ist zudem unempfindlich gegenüber Drift in der Elektronik und gegenüber Störungen durch dicht benachbarte Frequenzen.

## Patentansprüche

1. Verfahren zur Elimination von Störanteilen konstanter Frequenzen in einem Frequenzspektrum eines FMCW-Radarsystems, bei dem

   - in einem ersten Schritt eine Referenzmessung von Störsignalen durchgeführt wird, bei der das Auftreten von Nutzsignalen nach Möglichkeit vermieden wird,
   - in einem zweiten Schritt aus dieser Referenzmessung ein Spektrum von Störfrequenzen ermittelt wird,
   - in einem dritten Schritt eine Messung durchgeführt wird, in der ein ein Nutzsignal enthaltendes Meßsignal erzeugt wird,

   **dadurch gekennzeichnet, dass**

   - in einem vierten Schritt an einer vorgegebenen Anzahl von in gleichem zeitlichem Abstand zueinander versetzten Abtastpunkten ein jeweiliger Wert des Meßsignales bestimmt wird,
   - in einem fünften Schritt aus dem abgetasteten Meßsignal mittels der bekannten Störfrequenzen diejenigen komplexen Amplituden bestimmt werden, die den durch die Störfrequenzen hervorgerufenen Signalanteil des abgetasteten Meßsignals approximieren, und
   - in einem sechsten Schritt dieser Anteil von dem abgetasteten Meßsignal zu einem Differenzsignal subtrahiert wird.

2. Verfahren nach Anspruch 1, bei dem in dem fünften Schritt die komplexen Amplituden bestimmt werden, indem ein Vektor, der die abgetasteten Werte des Meßsignales in chronologischer Reihenfolge als Komponenten enthält, mittels einer Matrix transformiert wird, die eine mittels einer Methode kleinster Quadrate zur Minimierung des quadratischen Fehlers der Lösung eines überbestimmten linearen Gleichungssystems gefundene Pseudo-Inverse derjenigen Matrix darstellt, die eine der Anzahl der Störfrequenzen gleiche Anzahl an Zeilen und eine der Anzahl der Abtastpunkte gleiche Anzahl an Spalten besitzt und deren Elemente in jeder Zeile Exponetialtunktionen einer mit Wurzel aus -1 und der Spaltennummer multiplizierten jeweiligen Störfrequenz sind.

## Claims

1. Method for elimination of interference components at constant frequencies in a frequency spectrum of an FMCW radar system, in which

   - in a first step, a reference measurement of interference signals is carried out, in which the occurrence of useful signals is as far as possible avoided,
   - in a second step, a spectrum of interference frequencies is determined from this reference measurement,
   - in a third step, a measurement is carried out, in which a measurement signal containing a useful signal is produced,

   **characterized in that**

   - in a fourth step, a value of the measurement signal is determined at each of a predetermined number of sampling points which are offset by the same time interval with respect to one another,
   - in a fifth step, the known interference frequencies are used to determine, from the sampled measurement signal, those complex amplitudes which approximate to the proportion of the frequency spectrum of the sampled measurement signals caused by the interference frequencies, and
   - in a sixth step, this component is subtracted from the sampled measurement signal to form a difference signal.

2. Method according to Claim 1, in which in the fifth step, the complex amplitudes are determined in that a vector which contains the sampled values of the measurement signal in a chronological sequence as components is transformed by means of a matrix, which represents a pseudo-inverse, which is found by means of a least-squares method for minimizing the square of the error of the solution of an overdefined linear equation system, of that matrix which has a number of rows corresponding to the number of interference frequencies and has a number of columns corresponding to the number of sampling points, and whose elements in each row are exponential functions of a respective interference frequency multiplied by the square root of -1 and the column number.

## Revendications

1. Procédé pour l'élimination des parties parasites à fréquence constante dans un spectre de fréquence d'un système radar FMCW, dans lequel :

   - dans une première étape, on effectue une mesure de référence des signaux parasites, dans laquelle on évite si possible la présence de signaux utiles,

- dans une deuxième étape, on calcule à partir de cette mesure de référence un spectre de fréquences parasites,
- dans une troisième étape, on effectue une mesure dans laquelle on crée un signal de mesure contenant un signal utile,

**caractérisé en ce que**

- dans une quatrième étape, on détermine en un nombre prédéterminé de points d'échantillonnage décalés les uns des autres du même écart temporel une valeur respective du signal de mesure,
- dans une cinquième étape, on détermine à partir du signal de mesure échantillonné et au moyen des fréquences parasites connues les amplitudes complexes qui approchent la partie du signal de mesure échantillonné provoquée par les fréquences parasites, et
- dans une sixième étape, cette partie du signal de mesure échantillonné est soustraite pour obtenir un signal de différence.

2. Procédé selon la revendication 1, dans lequel, dans la cinquième étape, les amplitudes complexes sont déterminées en transformant un vecteur qui contient comme composants les valeurs échantillonnées du signal de mesure dans leur succession chronologique au moyen d'une matrice qui représente le pseudo-inverse, obtenu au moyen d'une méthode par moindres carrés pour minimiser les erreurs quadratiques, de la solution d'un système d'équations linéaires surdéterminé de la matrice qui possède un nombre de lignes égal au nombre de fréquences parasites et un nombre de colonnes identique au nombre des points d'échantillonnage et dont les éléments de chaque ligne sont des fonctions exponentielles d'une fréquence parasite respective multipliée par la racine carrée de -1 et par le numéro de la colonne.